(19) Europäisches Patentamt
European Patent Office
Office européen des brevets

(11) Veröffentlichungsnummer: **0 074 336**
**B1**

(12) **EUROPÄISCHE PATENTSCHRIFT**

(45) Veröffentlichungstag der Patentschrift: **02.10.85**

(51) Int. Cl.⁴: **C 07 F 9/38**, C 02 F 5/14, C 23 F 11/16

(21) Anmeldenummer: **82810361.4**

(22) Anmeldetag: **30.08.82**

# (54) Gegen Korrosion und/oder Kesselsteinablagerung inhibierte Systeme.

(30) Priorität: **04.09.81 GB 8126809**
**11.06.82 GB 8217052**

(43) Veröffentlichungstag der Anmeldung:
**16.03.83 Patentblatt 83/11**

(45) Bekanntmachung des Hinweises auf die Patenterteilung:
**02.10.85 Patentblatt 85/40**

(84) Benannte Vertragsstaaten:
**BE DE FR IT NL**

(56) Entgegenhaltungen:
**CH - A - 597 366**
**DE - A - 2 225 645**
**DE - A - 2 310 450**
**DE - A - 2 632 774**
**US - A - 3 032 500**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Cook, Barry, Dr., 11 Warwick Drive Urmston, Manchester M31 2AY Lancashire (GB)**
Erfinder: **Richardson, Norman, 21, Grey Street Middleton, Manchester (GB)**
Erfinder: **Tames, Joseph Dr., 9 Wyndcliffe Drive Flixton Urmston, Manchester M31 3LD (GB)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

**Beschreibung**

Die Erfindung betrifft ein Verfahren zur Inhibierung der Korrosion und/oder der Kesselsteinablagerung in wäßrigen oder teilweise wäßrigen Systemen, enthaltend von 0,1 bis 50 000 ppm an 2-Hydroxyphosphonessigsäure oder ein wasserlösliches Salz davon, sowie die Verwendung dieser Systeme zur Inhibierung der Korrosion von Metallen und/oder Kesselsteinablagerung.

In der deutschen Offenlegungsschrift 2 310 450 sind Verbindungen der Formel

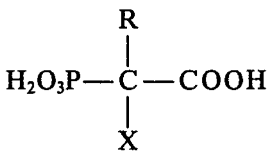

beschrieben, worin R eine Alkylgruppe mit 1 – 4 C-Atomen und X Wasserstoff oder eine Hydroxylgruppe bedeuten. Diese Verbindungen und deren wasserlösliche Salze finden Anwendung als Komplexierungsmittel für mehrwertige Metallionen. Die Verbindungen eignen sich auch als Korrosions- oder Kesselstein-Inhibitoren für Kühlwasser.

In der deutschen Offenlegungsschrift 2 310 450 wird früherer Stand der Technik wie folgt diskutiert. Die deutsche Patentschrift 1 045 373 offenbart die Verwendung von Methylendiphosphonsäure als gutes Komplexierungsmittel für Calcium. Wird eine Phosphonsäuregruppe durch eine Carboxylgruppe ersetzt, so verringern sich die eutrophischen Eigenschaften, d. h. der biologische Nährwert. Dabei werden aber auch die komplexierenden Eigenschaften der so erhaltenen Phosphonessigsäure herabgesetzt. Um gute komplexierende Eigenschaften und verringerte eutrophische Eigenschaften zu kombinieren, muß gemäß der deutschen Offenlegungsschrift 2 310 450 eines der Protonen der Methylengruppe der Phosphonessigsäure durch eine Alkylgruppe mit 1 – 4 C-Atomen ersetzt werden; das zweite Proton kann gegebenenfalls durch eine Hydroxylgruppe ersetzt sein.

In deutlichem Gegensatz dazu wurde nun gefunden, daß sich durch die Verwendung von 2-Hydroxyphosphonessigsäure anstelle von z. B. 2-Hydroxy-2-phosphonpropionsäure in wäßrigen Systemen eine wesentlich verbesserte Korrosionsschutzwirkung erzielen und/oder die Ablagerung von Kesselstein verhindern läßt. Darüber hinaus zeichnet sich die 2-Hydroxyphosphonessigsäure auch in teilweise wäßrigen Systemen, wie wäßrigen, maschinell arbeitenden Flüssigkeiten, Antigefrier-Flüssigkeiten, hydraulischen Flüssigkeiten auf der Basis von Wasser/Glykol, wäßrigen Oberflächenbeschichtungsmitteln, z. B. Emulsionsfarben auf der Basis von Wasser für Metalle und Pulverbeschichtungsmittel für Metalle aus.

Demzufolge betrifft die vorliegende Erfindung ein Verfahren zur Inhibierung der Korrosion von Metallen, besonders Eisenmetallen, und/oder der Kesselsteinablagerung in wäßrigen oder teilweise wäßrigen Systemen, dadurch gekennzeichnet, daß man diesem System zwischen 0,1 und 50 000 ppm an 2-Hydroxyphosphonessigsäure der Formel I

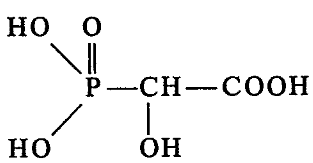

(I)

oder eines wasserlöslichen Salzes davon zusetzt.

Die 2-Hydroxyphosphonessigsäure ist eine bekannte Substanz, die z. B. in der US-PS 3 032 500 als Komplexierungsmittel für Schwermetallkationen und neuderdings in der Patentanmeldung EP-PA 0 050 792 als Mittel gegen Herpes-Viren bei Mensch und Tier beschrieben wurde. Sie kann nach an sich bekannten Methoden hergestellt werden, z. B. durch Umsetzung von ortho-Phosphorsäure, eines Salzes oder einer Lösung davon oder von Phosphortrichlorid mit Glyoxylsäure, einem Salz oder einer Lösung davon. Die 2-Hydroxyphosphonessigsäure kann als freie Säure, als wasserlösliches Salz oder Salze davon, wobei sie teilweise oder vollständig neutralisiert werden kann, eingesetzt werden, z. B. als Alkalimetall-, Erdalkalimetall-, Ammonium- oder gegebenenfalls durch eine oder 6 Hydroxylgruppen, enthaltend 1 bis 20, vorzugsweise 1 bis 12 C-Atome, substituiertes Alkylaminsalz. Beispiele geeigneter Salze sind: das Lithium-, Natrium-, Kalium-, Calcium-, Strontium-, Magnesium-, Ammonium-, Methylamin-, Äthylamin-, n-Propylamin-, Trimethylamin-, Triäthylamin-, n-Butylamin-, n-Hexylamin-, Octylamin-, Äthanolamin-, Diäthanolamin-, Triäthanolamin- oder Morpholinsalz.

Zur Verhinderung der Metallkorrosion und/oder der Kesselsteinablagerung aus dem System wird die 2-Hydroxyphosphonessigsäure den wäßrigen Systemen zweckmäßig in einer Menge von 0,1 bis 50' 000 ppm zugegeben.

Die Menge an 2-Hydroxyphosphonessigsäure, die dem zu behandelnden wäßrigen System zugegeben wird, hängt von der erwünschten Wirkung ab. Für Schutzbehandlungen gegen Korrosion, gegebenenfalls in Kombination mit Behandlungen gegen Kesselsteinablagerung, beträgt die dem wäßrigen

System zugegebene Menge an 2-Hydroxyphosphonessigsäure zweckmäßig von 0,1 bis 50'000 ppm (oder 0,00001 bis 5 Gew.-%), vorzugsweise von 1 bis 500 ppm (oder 0,0001 bis 0,05 Gew.-%), bezogen auf das wäßrige System. Für die Schutzbehandlung gegen die Kesselsteinablagerung allein beträgt die dafür verwendete Menge an 2-Hydroxyphosphonessigsäure zweckmäßig von 1 bis 200 ppm, vorzugsweise von 1 bis 30 ppm, bezogen auf das wäßrige System.

Von besonderem Interesse als wäßrige Systeme, die erfindungsgemäß, insbesondere gleichzeitig gegen Korrosion und Kesselsteinablagerung behandelt werden können, sind Kühlwassersysteme, Dampf erzeugende Systeme, Meerwasserverdampfer, hydrostatische Kocher, Gaswaschsysteme und Heizsysteme in geschlossenem Kreislauf.

Von besonderem Interesse als wäßrige Systeme für die Behandlung gegen die Korrosion allein sind wäßrige, maschinell arbeitende Systeme, die z. B. beim Bohren, Fräsen, Ausbohren, Nutenziehen, Ziehen, Drücken auf der Drehbank, Drehen, Schneiden, Sägen, Schleifen, Gewindeschneiden oder der nicht-spanabhebenden Verformung beim Ziehen und Walzen Anwendung finden; wäßrige Reinigungssysteme, wäßrige Glykol-Antigefrier-Systeme, hydraulische Flüssigkeiten auf der Basis von Wasser/Glykol, und polymere Oberflächenbeschichtungsmittel auf wäßriger Basis.

Die Verbindung der Formel I kann allein oder zusammen mit anderen für die Behandlung von wäßrigen Systemen geeigneten Verbindungen verwendet werden.

Für die Behandlung von ganz wäßrigen Systemen, wie Kühlwassersystemen, Dampf erzeugenden Systemen, Meerwasserverdampfern, hydrostatischen Kochern und in geschlossenem Kreislauf arbeitenden Heizsystemen, können weitere Korrossionsinhibitoren, wie z. B. wasserlösliche Zinksalze; Phosphate, Polyphosphate; Phosphonsäuren und deren Salze, wie Acetodiphosphonsäure, Nitrilotris-methylenphosphonsäure und Methylamino-dimethylenphosphonsäure; Phosphoncarbonsäuren und deren Salze, z. B. solche der in der deutschen Offenlegungsschrift 2 632 774 beschriebenen Art, 2-Phosphonbutan-1,2,4-tricarbonsäure und solche der in der britischen Patentschrift 1 572 406 beschriebenen Art; Chromate, wie Natriumchromat; Nitrate, wie Natriumnitrat; Nitrite, wie Natriumnitrit; Benztriazole, Bis-Benztriazole oder Kupfer desaktivierende Benztriazol- oder Tolutriazolderivate; N-Acyl-sarcosine; N-Acyliminodiessigsäuren; Äthanolamine, Fettsäureamine und Polycarbonsäuren, z. B. Polymaleinsäure und Polyacrylsäure sowie deren Alkalimetallsalze, Copolymere des Maleinsäure-Anhydrids, Acrylsäure-Copolymere und substituierte Derivate der Polyaminsäuren und Polyacrylsäuren sowie deren Copolymere, verwendet werden.

In diesen wäßrigen Systemen können auch Dispergier- und/oder Antifällungsmittel eingesetzt werden, z. B. polymerisierte Acrylsäure und Salze davon, Phosphinopolycarbonsäuren wie im britischen Patent 1 458 235 beschrieben, hydrolysiertes Polyacrylnitril, polymerisierte Methacrylsäure und Salze davon, Polyacrylamid und Copolymere davon mit Acryl- und Methacrylsäure, Ligninsulfonsäure und Salze davon, Tannin, Naphthalinsulfonsäure-Formaldehyd-Kondensationsprodukte, Stärke und deren Derivate, sowie Cellulose. Spezifische Antifällungsmittel können ebenfalls verwendet werden, wie z. B. 2-Phosphonbutan-1,2,4-tricarbonsäure, hydrolysiertes Polymaleinsäureanhydrid und dessen Salze, Alkylphosphonsäuren, 1-Aminoalkyl-1,1-diphosphonsäuren und deren Salze sowie Alkalimetallpolyphosphate.

Zusammen mit der Verbindung der Formel I können auch Ausfällungsmittel, wie Alkalimetall-orthophosphate und -carbonate; $O_2$ bindende Mittel ($O_2$ Scavengers) wie Alkalimetallsulfite und Hydrazine; Sequestriermittel, wie Nitrilotriessigsäure und Salze davon; Antischaummittel, wie Silicone, z. B. Polydimethylsiloxane, Distearylsebacinsäureamid, Distearyladipinsäureamid und verwandte Produkte, die sich aus Äthylenoxid- und Propylenoxid-Kondensationen in Addition mit Fettalkoholen, ableiten, wie Caprylalkohole und deren Äthylenoxidkondensationsprodukte; ferner Biozide, wie Amine, quaternäre Ammonium-Verbindungen, Chlorophenole, Schwefel enthaltende Verbindungen wie Sulfone, Methylenbisthiocyanate und Carbamate, Isothiazolone, bromierte Propionsäureamide, Triazine, Phosphonium-Verbindungen, chlorierte oder Chlor abgebende Mittel und organometallische Verbindungen wie Tributylzinnoxid, eingesetzt werden.

Ist das nach dem erfindungsgemäßen Verfahren inhibierte System keine vollständig wäßrige flüssige Formulierung wie z. B. eine maschinell arbeitende Formulierung, so handelt es sich z. B. um eine mit Wasser verdünnbare Schneid- oder Schleifflüssigkeit.

Die wäßrigen flüssigen Formulierungen für die maschinell arbeitenden Systeme gemäß der Erfindung können z. B. Formulierungen für die Metallbearbeitung sein. Unter Metallbearbeitung wird Ausbohren, Nutenziehen, Ziehen, Drücken auf der Drehbank, Schneiden, Schleifen, Bohren, Fräsen, Drehen, Sägen, nicht-spanabhebendes Verformen und Walzen verstanden. Als Beispiele von mit Wasser verdünnbaren Schneid- oder Schleif-Flüssigkeiten, denen das Korrosionsschutzmittel der Formel I einverleibt werden kann, seien erwähnt:

a) Wäßrige Konzentrate eiens oder mehrerer Korrosionsinhibitoren und gegebenenfalls eines oder mehrerer Anti-Verschleißmittel, in Verdünnungen von 1 : 50 bis 1 : 100, die üblicherweise als Schleif-Flüssigkeiten Verwendung finden.
b) Polyglykole, wie Biozide, Korrosionsinhibitoren und Anti-Verschleißmittel enthalten, und die für Schneidoperationen in Verdünnungen von 1 : 20 bis 1 : 40 und für Schleifoperationen in Verdünnungen von 1 : 60 bis 1 : 80 verwendet werden.

c) Halb-synthetische Schneidflüssigkeiten, die den unter b) genannten Systemen ähnlich sind, aber zusätzlich 10 bis 25% Öl mit ausreichendem Emulgator enthalten, um das mit Wasser verdünnte Produkt durchscheinend zu machen.
d) Emulgierbare Mineralölkonzentrate, die z. B. Emulgatoren, Korrosionsinhibitoren, Hochdruck-/Antiverschleiß-Hilfsmittel, Biozide, Antischaummittel, Haftmittel und dergleichen enthalten, werden im allgemeinen mit Wasser zu weißen opaken Emulsionen mit einer Konzentration von 1 : 10 bis 1 : 50 verdünnt.
e) Ähnliche Produkte wie unter d) angegeben, die weniger Öl und mehr Emulgator enthalten, und die beim Verdünnen auf Konzentationen von 1 : 50 bis 1 : 100 durchscheinende Emulsionen für Schneid- und Schleifoperationen ergeben.

Zur Verhinderung der Korrosion bei der Bearbeitung von Metallen wurden schon Gemische aus Natriumnitrit und Triäthanolamin verwendet. Wegen der damit verbundenen Toxizitätsprobleme (z. B. Gefahr, daß N-Nitrosamine gebildet werden) und wegen der gesetzlichen Vorschriften bezüglich der Abwässer in einigen Ländern, werden Alternativen zum Gebrauch von Natriumnitrit gesucht.

Bei den teilweise wäßrigen Systemen, in denen die Komponente a) eine wäßrige flüssige Formulierung für die maschinelle Bearbeitung ist, kann die Verbindung der Formel I allein oder im Gemisch mit anderen Zusatzstoffen, z. B. bekannten Korrosionsinhibitoren und/oder Hochdruck-Zusätzen, verwendet werden.

Als Beispiele von anderen Korrosionsinhibitoren, die zusammen mit der Verbindung der Formel I eingesetzt werden können, seien genannt:

a) Organische Säuren, deren Ester oder Ammonium-, Amin-, Alkanolamin- und Metallsalze, z. B. Benzoesäure, p-tert.-Butylbenzoesäure, Dinatriumsebacat, Triäthanolaminlaurat, Iso-nonansäure, das Triäthanolaminsalz von p-Toluolsulfonsäureamid-capronsäure, Natrium-N-lauroylsarcosinat oder Nonylphenoxyessigsäure.
b) N-haltige Verbindungen der folgenden Klassen: Fettsäurealkanolamide; Imidazoline, z. B. 1-Hydroxyäthyl-2-oleyl-imidazolin; Oxazoline; Triazole, z. B. Benztriazole; Triäthanolamin; Fettsäureamine; anorganische Salze, wie Natriumnitrat.
c) P-haltige Verbindungen der folgenden Klassen: Aminphosphate, Phosphonsäuren oder anorganische Salze, z. B. Natriumdihydrogenphosphat oder Zinkphosphat.
d) S-haltige Verbindungen der folgenden Klassen: Natrium-, Calcium- oder Barium-Petrolsulfonate, oder heterocyclische Verbindungen, z. B. Natrium-Mercaptobenzthiazole.

N-haltige Verbindungen, besonders Triäthanolamin, sind bevorzugt.

Beispiele von Hochdruck-Zusätzen, die in den erfindungsgemäß inhibierten Systemen vorhanden sein können, sind S- und/oder P- und/oder Halogen-haltige Verbindungen, z. B. sulfuriertes Spermöl, sulfurierte Fette, Tritolylphosphat, chlorierte Paraffine oder äthoxylierte Phosphatester.

Wird Triäthanolamin in den erfindungsgemäßen wäßrigen Systemen verwendet, so beträgt das Verhältnis der Verbindung der Formel I zu Triäthanolamin vorzugsweise 2 : 1 bis 1 : 20.

Die teilweise wäßrigen, erfindungsgemäß inhibierten Systeme, können auch wäßrige Oberflächenbeschichtungssysteme sein, z. B. sogenannte Primer-Emulsionsfarben und wäßrige Pulver-Beschichtungsmittel für metallische Substrate.

Die wäßrigen Oberflächenbeschichtungsmittel können z. B. Anstrichfarben sein, wie Styrol/Acryl-Copolymer-Emulsionsfarben, Harze, Latex oder andere polymere Oberflächenbeschichtungsmittel auf wäßriger Basis.

Natriumnitrit und Natriumbenzoat sind verwendet worden, um das Schnell-Rosten von wäßrigen Primer-Farben zu verhindern. Wegen der damit verbundenen Toxizitätsprobleme und der ungenügenden Stabilität der Emulsionen bei den zur Anwendung gelangenden hohen ionischen Konzentrationen, ist die Industrie bestrebt, von der Verwendung von Natriumnitrit und Natriumbenzoat wegzukommen.

In den erfindungsgemäß inhibierten Oberflächenbeschichtungssystemen kann die Verbindung der Formel I allein oder im Gemisch mit anderen Zusätzen, z. B. bekannten Korrosionsinhibitoren, Bioziden, Emulgatoren und/oder Pigmenten verwendet werden.

Als weitere bekannte Korrosionsinhibitoren können z. B. solche der im Vorangehenden unter a), b), c) und d) genannten Art eingesetzt werden.

Als Beispiele von Bioziden für derartige wäßrige Systeme, die zusammen mit der Verbindung der Formel I verwendet werden können, seien erwähnt: Phenole, alkylierte und halogenierte Phenole, z. B. Pentachlorphenol, o-Phenylphenol, o-Phenoxyphenol und chloriertes o-Phenoxyphenol, ferner Salicylanilide, Diamine, Triazine und organometallische Verbindungen, wie Organoquecksilber- und Organozinn-Verbindungen.

Als Pigmente können in derartigen Systemen z. B. Titandioxid, Zinkchromat, Eisenoxid und organische Pigmente, wie Phthalocyanine, eingesetzt werden.

Die in den nachfolgenden Beispielen 2–6 verwendete 2-Hydroxyphosphonessigsäure wird wie folgt hergestellt:

## Beispiel 1

A) 16,3 Teile (0,11 Mol) einer 50%igen Glyoxylsäure und 8,2 Teile (0,1 Mol) ortho-Phosphorsäure werden zusammen während 24 Stunden unter Rühren bei 98–100°C geheizt. 24,5 Teile einer 60%igen, wäßrigen 2-Hydroxyphosphonessigsäure werden dabei erhalten.

B) 150 Teile einer 60%igen, wäßrigen 2-Hydroxyphosphonessigsäure-Lösung (gemäß Beispiel 1A erhalten) werden unter reduziertem Druck (20 mbar) eingedampft. Dabei werden 104 Teile eines braunen, viskosen Öls erhalten, dessen Kristallisation anschließend induziert wird. Zur Beseitigung der Verunreinigungen wird die so erhaltene, rohe kristallisierte Masse mit Aceton zerrieben. Die so erhaltene, ledergelbe, kristalline 2-Hydroxyphosphonessigsäure wird durch Filtration isoliert, mit Aceton gewaschen und getrocknet. Nach anschließender Rekristallisation dieser Ware aus Wasser wird reine 2-Hydroxyphosphonessigsäure als weiße Kristalle mit Schmelzpunkt 165–167°C isoliert. (Teile und Prozente = Gewichtsteile bzw. -Prozente)

Analyse:
$^{31}P-NMR\ \delta = -14$ ppm (durch außenstehende $H_3PO_4$ bedingt);
$^{1}H-NMR\ \delta = 4{,}24$ ppm, $P-\underline{CH}$; $^{J}P-CH = 18$ Hz
IR 1745 $cm^{-1}$ (COOH); 1200 $cm^{-1}$ (P = O).

## Beispiel 2

Die korrosionsverhindernde Wirkung der Verbindung der Formel I wird anhand einer belüftenden Lösung in einer Flasche (Ärated Solution Bottle Test) geprüft. Korrosives Standard-Wasser wird aus 20 g $CaSO_4 \cdot 2\,H_2O$, 15 g $MgSO_4 \cdot 7\,H_2O$, 4,6 g $NaHCO_3$, 7,7 g $CaCl_2 \cdot 6\,H_2O$ und 205 Litern destilliertem Wasser hergestellt.

5 x 2,5 cm große Stücke aus Flußstahl (weicher Stahl) werden mit Bimsstein geschrubbt, während einer Minute in Chlorwasserstoffsäure eingetaucht und dann gespült, getrocknet und gewogen. Die gewünschte Menge an Zusatzstoffen wird in 200 ml des korrosiven Standard-Wassers gelöst. Zwei Stahlstücke werden in der Lösung suspendiert und das Ganze wird in einer geschlossenen Flasche mit Hilfe eines Thermostaten bei 40°C gelagert. Während der Lagerung wird Luft mit einer Geschwindigkeit von 500 ml/Minute durch die Lösung geleitet, wobei die Luft vom Stahlstück ferngehalten wird. Allfällige Wasserverluste durch Verdampfen werden fortlaufend mit destilliertem Wasser ergänzt. Nach 64 Stunden werden die Stahlstücke entfernt, mit Bimsstein geschrubbt, eine Minute in Chlorwasserstoffsäure, die mit 1 Gew.-% Hexamethylendiamin inhibiert ist, eingetaucht, dann gespült, getrocknet und wieder gewogen. Es tritt ein gewisser Gewichtsverlust ein. Für jeden Versuch wird auch eine sogenannte Blindprobe durchgeführt, d. h. ein Stahlmuster wird in Testwasser eingetaucht, das keinen Korrosionsinhibitor enthält. Der Korrosionsgrad wird in Milligramm Gewichtsverlust/Quadratdezimeter/Tag (G.Q.D.) berechnet. Der Einfachheit halber werden die Resultate jedoch als prozentmäßige Schutzwirkung angegeben.

$$\%\ \text{Schutzwirkung} = \frac{\text{Korrosionsgrad der Blindprobe (in G.Q.D.)} - \text{Korrosionsgrad des Musters (in G.Q.D.)}}{\text{Korrosionsgrad der Blindprobe (in G.Q.D.)}} \times 100$$

Die Resultate für eine Testserie, bei denen 100 ppm, 90 ppm, 80 ppm, 70 ppm, 60 ppm, 50 ppm und 40 ppm 2-Hydroxyphosphonessigsäure verwendet werden, sind in Tabelle 1 angegeben.

Tabelle 1

Korrosionsverhindernde Wirkung von 2-Hydroxyphosphonessigsäure bei Flußstahl in korrosivem Standard-Wasser

| Beispiel | Strukturt | % Korrosionsverhinderung | | | | | | |
|---|---|---|---|---|---|---|---|---|
| | | 100 ppm | 90 ppm | 80 ppm | 70 ppm | 60 ppm | 50 ppm | 40 ppm |
| 2 | 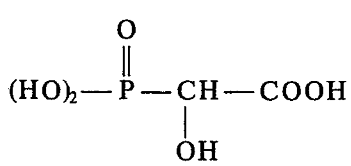 | 100 | 100 | 100 | 100 | 100 | 99 | 97,5 |
| | ex. Beispiel 1(A) | | | | | | | |

Die Resultate in Tabelle 1 zeigen die korrosionsverhindernden Eigenschaften der 2-Hydroxyphosphonessigsäure bei Fließstahl.

## Beispiel 3

Die korrosionsverhindernde Wirkung einer erfindungsgemäßen wäßrigen Schneidflüssigkeit wird wie untenstehend angegeben geprüft. Diese Testmethode ist eine Modifikation des »Institute of Petroleum Test 287« (IP 287).

Es wird eine 1%ige Lösung der zu prüfenden Verbindung hergestellt, die genügend Triäthanolamin (TEA) enthält, um einen pH von 9 zu erreichen. Diese Lösung wird weiter um den Faktor 2, 4, 8 und 16 verdünnt. Jede der erhaltenen Lösungen wird nach der im Institute of Petroleum Test 287 beschriebenen Methode mit Gußeisenspänen in Berührung gebracht. Bei diesem Versuch wird entionisiertes Wasser und hartes Wasser gemäß IP 287 verwendet.

Die visuelle Beurteilung des Zustandes der Metallspäne nach der Behandlung wird nach den folgenden Richtlinien vorgenommen:

| Ausmaß des Rostens | Bewertung |
|---|---|
| kein Rosten | 0 |
| $\leq$5 kleine Flecken | S (Spuren) |

Die Resultate sind in der Tabelle 2 zusammengefaßt. Sie illustrieren die korrosionsverhindernde Wirkung der Verbindung der Formel I in wäßrigen Schneidflüssigkeiten.

Tabelle 2

Korrosionsverhindernde Wirkung bei Gußeisen in wäßrigen Schneidflüssigkeiten

| Beispiel | Struktur | % TEA pro 1% der Verbindung des Beispiels | pH | Institute of Petroleum Test 287 Verdünnung*) Verhältnis | % | Rost (entionisiertes Wasser) | Rost (hartes Wasser) |
|---|---|---|---|---|---|---|---|
| 2 | 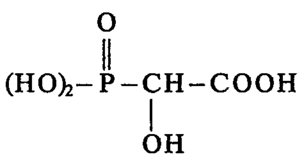 | 12,5 | 9,0 | 1:15 | 0,5 | O | O |
| | | | | 1:30 | 0,25 | O | O |
| | | | | 1:60 | 0,125 | O | S |
| | ex. Beispiel 1(A) | | | 1:120 | 0,062 | S | S |

*) Verdünnungs-Verhältnis = Verhältnis von Triäthanolamin + Verbindung der Formel I zu Wasser
Verdünnung in % = %-Konzentration der Verbindung der Formel I (ohne TEA).

## Beispiel 4

Die Wirksamkeit der Verbindung der Formel I zum Verhindern des Schnell-Rostens wird wie folgt geprüft:

Eine typische Primer Styrol/Acryl-Copolymer-Emulsionsfarbe wird unter Verwendung eines Hochgeschwindigkeitsrührers aus den folgenden Bestandteilen hergestellt (alle Teile sind Gewichtsteile):

| | |
|---|---|
| Zink-orthophosphat | 190 Teile |
| Titandioxid RCR-2 | 58 Teile |
| Modocol® EK-600 (4% in Wasser; Polyacrylat) | 64 Teile |
| Vinapol® 1640, 5% in Wasser (Kalium-Polymethacrylat der Fa. Vinyl Products Ltd.) | 36 Teile |
| Ammoniak (0,880) | 10 Teile |
| Wasser | 92 Teile |
| Vinacryl® M 175 (Styrol/Acryl-Copolymer der Fa. Vinyl Products Ltd.) | 549 Teile |
| Acticide® MPM (Organoquecksilberverbindung der Fa. Thor Chemicals Ltd.) | 1 Teil |
| | 1000 Teile |

Ein wäßriges Gemisch aus Verbindung der Formel I und Triäthanolamin (TEA) [Verbindung der Formel I : TEA : Wasser = 3 : 48 : 2; Gewichtsverhältnis] wird unter Rühren in 100 g-Portionen der obigen Primer-Emulsionsfarbe eingearbeitet, so daß sich Konzentrationen von 500, 250 und 100 ppm der Verbindung der Formel I ergeben. Der Versuch wird auch mit einer Blindprobe ohne Korrosionsinhibitor durchgeführt.

Farbmuster werden mit einem Pinsel auf je zwei Stahlstücke (15,24 cm x 10,16 cm), die frisch durch Sandstrahlen auf Sa 3 gebracht wurden, appliziert. Ein Anstrich wird auf die Vorderseite der Stücke aufgebracht. Nach dem Trocknen wird die Hälfte der Stücke mit einem zweiten Anstrich versehen, indem man die Farbe mit einem Pinsel im rechten Winkel zum ersten Anstrich aufträgt. Die bemalten Stücke werden unter kontrollierten Bedingungen getrocknet (20° C, 60% relative Luftfeuchtigkeit). Nachher wird das Schnell-Rosten visuell beurteilt, und zwar auf Grund der Zahl und Art der Rostflecken mit einer Bewertungsskala von 0 bis 5 (0 = kein Schnell-Rosten, 5 = starkes Schnell-Rosten).

Die Resultate sind in Tabelle 3 angegeben.

Tabelle 3

Korrosionsverhinderung bei Stahl in Styrol/Acryl-Copolymer-Emulsionsfarbe

| Stahlstreifen Nr. | Korrosionsinhibitor | Konzentration an eingearbeitetem Korrosionsinhibitor (ppm) | Bewertung des ersten Anstrichs (Schicht) |
|---|---|---|---|
| 1 | Verbindung der Formel I | 2000 | 0 |
| 2 | | 2000 | 0 |
| 3 | | 500 | 0–1 |
| 4 | | 500 | 0–1 |
| 5 | | 250 | 0–1 |
| 6 | | 250 | 0–1 |
| 7 | | 100 | 2–3 |
| 8 | | 100 | 2–3 |
| 9 | ohne Korrosionsinhibitor | – | 4 |
| 10 | do. | – | 4 |

Tabelle 3 zeigt die ausgezeichnete korrosionsverhindernde Wirkung einer 2-Hydroxyphosphonessigsäure enthaltenden Emulsionsfarbe.

## Beispiele 5 und 6

### Antifällungstest für Calcium-Carbonat

Die folgenden Lösungen a), b) und c) werden hergestellt:

#### a) Calciumnitrat-Lösung

1,47 Teile Calciumnitrat Tetrahydrat werden in entionisiertem Wasser gelöst und die Lösung auf 1 Liter gebracht.

#### b) Natriumcarbonat-Lösung

0,646 Teile Natriumcarbonat werden in entionisiertem Wasser gelöst und die Lösung auf 1 Liter gebracht.

#### c) 2-Hydroxyphosphonessigsäure-Lösung

Die gemäß Beispiel 1(A) oder 1(B) erhaltene 2-Hydroxyphosphonessigsäure wird in Wasser so gelöst, daß eine Lösung enthaltend 1000 ppm aktiver Zusatzstoff entsteht.

50 ml der Calciumnitrat-Lösung werden in eine 120 g Glasflasche gestellt, die mit einem Schraubdeckel versehen ist. Dieser Lösung werden entsprechende Volumen der Lösung c) so zugegeben, daß eine Konzentration an 2-Hydroxyphosphonessigsäure von 5 ppm, 7,5 ppm bzw. 10 ppm im Endvolumen (100 ml) der Test-Lösung hergestellt wird [beispielsweise 1,0 ml einer 0,1%igen Lösung c) ergibt eine Konzentration von 10 ppm der 2-Hydroxyphosphonessigsäure in der Testlösung]. 50 ml der Lösung b) werden dann zugegeben und die so erhaltene Mischung geschüttelt. Die Test-Lösung wird dann während 24 Stunden in einem Bad bei einer konstanten Temperatur von 25°C gelagert. 25 ml dieser Lösung werden danach entzogen, ein Kristall von Patton und Reader-Reagenz [2-Hydroxyl-1-(2'-Hydroxy-4'-sulfo-1'-nphthylazo)-3-naphthoesäure] und anschließend zwei Pillen Natriumhydroxid zugegeben.

Die so erhaltene Lösung wird mit einer 0,01 M Äthylendiamintetraacetat-Dinatriumsalz-Lösung titriert. Die Resultate sind in der folgenden Tabelle 4 zusammengestellt und drücken die Verhinderung der Calciumcarbonat-Ausfällung, bezogen auf einen Blindtiter (beispielsweise einen reine 2-Hydroxyphosphonessigsäure enthaltenden Titer) aus.

$$\text{\% Verbindung} = \frac{\text{Titer} - \text{Blindtiter}}{7{,}78 - \text{Blindtiter}} \times 100$$

(7,78 ist der maximale, mögliche Titrationswert für 100% Verbindung.)

Tabelle 4

| Beispiel | Struktur des Inhibitors | % Verhinderung der Ausfällung bei einem Additiv-Zusatz von 5 ppm | 7,5 ppm | 10 ppm |
|---|---|---|---|---|
| 5 | 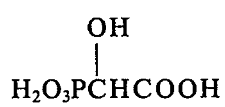 ex. Beispiel 1 (A) | 92,0 | 93,5 | 96,5 |
| 6 | 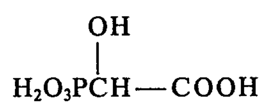 ex. Beispiel 1 (B) | 89,4 | 95,2 | 95,9 |

## Beispiel 7

Die erfindungsgemäß kombinierten Eigenschaften — Verhinderung der Kesselsteinablagerung, Korrosionsschutzwirkung — werden nach dem folgenden Verfahren in einer Wasser-Verdampfungs-/Abkühlungsvorrichtung bestimmt.

Diese Standardprüfmethode besteht darin, daß das Wasser bis zum gewünschten Grad aufkonzentriert wird. Wenn aufkonzentriert, dann werden die vorgewogenen Korrosionsstücke, der Wärme-Austauscher und anschließend der Inhibitor in die obenerwähnte Vorrichtung gestellt. Eine passivierende Dosis des Kesselstein-/Korrosionsinhibitors wird dem Speisewasser für eine Zeitspanne von 3 Tagen zugegeben. Danach werden die Inhibitor-Mengen innert 2 Tagen auf die Erhaltungsdosis reduziert. Wenn die Dosismenge des Inhibitors den gewünschten Aufrechterhaltungsstand erreicht hat, wird dem Speisewasser genügend Kesselstein-/Korrosionsinhibitor zugegeben, so daß dieser Stand während 10 Tagen erhalten bleibt.

Nach dieser Zeit werden die Korrosionsstufen durch den Gewichtsverlust der Metall-Stücke und die Kesselsteinablagerungsraten durch Gewichtszunahme des Wärme-Austauschers berechnet.

Standard-Operationsparameter für die obige Prüfvorrichtung:

| | |
|---|---|
| Volumen des Systems | 20 Liter |
| Durchsatz-Menge | 15 Liter/Minute |
| Durchfluß-Geschwindigkeit | 0,3 Meter/Sekunde |
| Temperatur des Systems | 40° C |
| Temperaturunterschied quer durch den Wasser-Austauscher | 2° C |
| Halbwert (approx.) | 30 Stunden |

Typische Analyse des verwendeten Wassers:

| | |
|---|---|
| pH | 8,9 |
| pA(*) | 120 ppm (als $CaCO_3$) |
| TA(*) | 470 ppm (als $CaCO_3$) |
| TH(*) | 450 ppm (als $CaCO_3$) |
| Cl | 75 ppm (als $Cl^-$) |

| Beispiel | Struktur des Inhibitors | Aktive Dosis (ppm) | Zeit (Tage) | Kesselstein-ablagerungs-Durchsatz (Gramm/Tag) | Fluß-Stahl Korrosions-rate MDD |
|---|---|---|---|---|---|
| – | Kontrolle | – | – | 2,85 | 32,5 |
| 7 | OH<br>$H_2O_3PCH—COOH$<br>ex. Beispiel 1(A) | 75<br>15 | 3<br>10 | 0,15 | 6,1 |

(*) pA = phenolische Alkalinität
TA = gesamte Alkalinität
TH = gesamte Härte

**Patentansprüche**

1. Verfahren zur Inhibierung der Korrosion von Metallen und/oder der Kesselsteinablagerung in wäßrigen und teilweise wäßrigen Systemen, dadurch gekennzeichnet, daß man dem System zwischen 0,1 und 50'000 ppm an 2-Hydroxyphosphonoessigsäure der Formel I

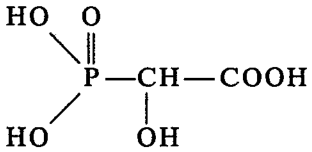

(I)

oder eines wasserlöslichen Salzes davon zusetzt.

2. Verfahren nach Anspruch 1, bei dem die Verbindung der Formel I in einer Menge von 1 bis 500 ppm, bezogen auf das System, zugesetzt wird.

3. Verfahren nach Anspruch 2, bei dem die Verbindung der Formel I in einer Menge von 1 bis 100 ppm, bezogen auf das System, zugesetzt wird.

4. Verfahren nach Anspruch 1, bei dem die Verbindung der Formel I in einer Menge von 1 bis 200 ppm, bezogen auf das System, zugesetzt wird.

5. Verfahren nach Anspruch 1, bei dem die Verbindung der Formel I in einer Menge von 1 bis 30 ppm, bezogen auf das System, zugesetzt wird.

6. Gegen Korrosion von Metallen inhibiertes wäßriges System, enthaltend a) ein wäßriges System, b) eine geringe Menge an 2-Hydroxyphosphonoessigsäure oder eines wasserlöslichen Salzes davon, und c) Triäthanolamin.

7. Verwendung eines wäßrigen oder teilweise wäßrigen Systems enthaltend zwischen 0,1 und 50'000 ppm einer Verbindung der Formel I nach Anspruch 1 zur kombinierten Inhibierung von Korrosion und Kesselsteinablagerung in Kühlwassersystemen, in dampferzeugenden Systemen, in Meerwasserverdampfern, in hydrostatischen Kochern, in Gaswaschsystemen oder in Heizsystemen in geschlossenen Kreisläufen.

8. Verwendung eines wäßrigen oder teilweise wäßrigen Systems enthaltend zwischen 0,1 und 50'000 ppm einer Verbindung der Formel I nach Anspruch 1 zur Inhibierung der Korrosion als wäßrige flüssige Formulierung zur maschinellen Bearbeitung, als wäßriges Reinigungssystem, als wäßriges Glykol-Antigefriersystem, als hydraulische Flüssigkeit auf der Basis von Wasser/Glykol oder als polymeres Oberflächenschutzsystem auf wäßriger Basis.

9. Verwendung nach Anspruch 8 als wäßrige flüssige Formulierung zur maschinellen Bearbeitung, enthaltend eine mit Wasser verdünnbare Schneid- oder Schleifflüssigkeit.

10. Verwendung nach Anspruch 7, wobei die Verbindung der Formel I zusammen mit einem oder mehreren anderen Korrosionsinhibitoren, einem Dispergier- und/oder einem Antifällungsmittel, einem Ausfällungsmittel, einem $O_2$ bindenden Mittel, einem Sequestriermittel, einem Antischaummittel und einem Biozid eingesetzt wird.

11. Verwendung eines teilweise wäßrigen Systems enthaltend zwischen 0,1 und 50'000 ppm der Verbindung der Formel I nach Anspruch 1 für die maschinelle Bearbeitung, wobei die Verbindung der Formel I zusammen mit einem oder mehreren anderen Korrosionsinhibitoren und/oder einem Hochdruck-Zusatzstoff verwendet wird.

12. Verwendung nach Anspruch 11, wobei der weitere Korrosionsinhibitor Triäthanolamin ist.

13. Verwendung nach Anspruch 12, wobei das Verhältnis der Verbindung der Formel I zu Triäthanolamin von 2 : 1 bis 1 : 20 ist.

14. Verwendung eines teilweise wäßrigen Systems enthaltend zwischen 0,1 und 50'000 ppm der Verbindung der Formel I nach Anspruch 1 zur wäßrigen Oberflächenbeschichtung, wobei die Verbindung der Formel I zusammen mit einem oder mehreren Korrosionsinhibitoren, einem Biozid, einem Emulgator und/oder einem Pigment verwendet wird.

**Claims**

1. A process for inhibiting corrosion of metals and/or scale deposition in an aqueous or partly aqueous system, which process comprises adding to said system a 2-hydroxyphosphonoacetic acid having the formula I

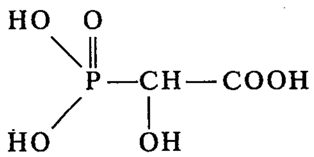

(I)

in an amount from 0,1 to 50 000 ppm, or a water-soluble salt thereof.

2. A process according to claim 1, wherein the compound of formula I is added in an amount from 1 to 500 ppm, based on the system.

3. A process according to claim 2, wherein the compound of formula I is added in an amount from 1 to 100 ppm, based on the system.

4. A process according to claim 1, wherein the compound of formula I is added in an amount from 1 to 200 ppm, based on the system.

5. A process according to claim 1, wherein the compound of formula I is added in an amount from 1 to 30 ppm, based on the system.

6. An aqueous system inhibited against corrosion of metals, comprising a) an aqueous system, b) a minor proportion of 2-hydroxyphosphonoacetic acid or a watersoluble salt thereof, and c) triethanolamine.

7. Use of an aqueous or partly aqueous containing a compound of formula I according to claim 1 in an amount from 0,1 to 50 000 ppm for the combined inhibition of corrosion and scale deposition in a cooling water system, a steam generating system, a sea-water evaporator, a hydrostatic cooker, a gas scrubbing system or a closed circuit heating system.

8. Use of an aqueous or partly aqueous system containing a compound of formula I according to claim 1 in an amount from 0,1 to 50 000 ppm, as an aqueous machining fluid formulation, an aqueous scouring system, an aqueous glycol antifreeze system, a water/glykol hydraulic fluid or a water-based polymeric surface coating composition.

9. Use according to claim 8, as an aqueous machining fluid formulation containing a water-dilutable cutting or grinding fluid.

10. Use according to claim 7, wherein the compound of formula I is used in conjunction with one or more of a further corrosion inhibitor, a dispersing and/or threshold agent, a precipitating agent, an oxygen scavenger, a sequestering agent, an antifoaming agent and a biocide.

11. Use of a partly aqueous system containing a compound of formula I according to claim 1 in an amount from 0,1 to 50 000 ppm for machining, said compound being employed in conjunction with one or more of a further corrosion inhibitor and/or an extreme pressure additive.

12. Use according to claim 11, wherein the further corrosion inhibitor is triethanolamine.

13. Use according to claim 12, wherein triethanolamine is present in such an amount that the ratio of the compound of formula I to triethanolamine is from 2 : 1 to 1 : 20.

14. Use of a partly aqueous system containing a compound of formula I according to claim 1 in an amount from 0,1 to 50 000 ppm for aqueous surface coating, said compound of formula I being used in conjunction with one or more of a corrosion inhibitor, a biocide, an emulsifier and/or a pigment.

**Revendications**

1. Procédé d'inhibition de la corrosion de métaux et/ou du dépôt de tartre dans des systèmes aqueux et partiellement aqueux, caractérisé en ce qu'on ajoute au système entre 0,1 et 50 000 ppm d'un acide hydroxyphosphonacétique répondant à la formule I:

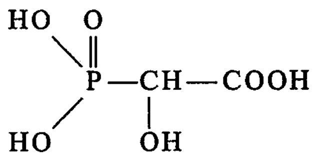

(I)

ou d'un de ses sels solubles dans l'eau.

2.Procédé suivant la revendication 1, dans lequel le composé répondant à la formule I est ajouté dans une quantité de 1 à 500 ppm par rapport au système.

3. Procédé suivant la revendication 2, dans lequel le composé répondant à la formule I est ajouté dans une quantité de 1 à 100 ppm par rapport au système.

4. Procédé suivant la revendication 1, dans lequel le composé répondant à la formule I est ajouté dans une quantité de 1 à 200 ppm par rapport au système.

5. Procédé suivant la revendication 1, dans lequel le composé répondant à la formule I est ajouté dans une quantité de 1 à 30 ppm par rapport au système.

6. Système aqueux inhibé contre la corrosion des métaux, contenant a) un système aqueux, b) une faible quantité d'acide 2-hydroxyphosphonacétique ou un de ses sels solubles dans l'eau, et c) de la triéthanolamine.

7. Utilisation d'un système aqueux ou partiellement aqueux contenant entre 0,1 et 50 000 ppm d'un composé répondant à la formule I selon la revendication 1 pour l'inhibition combinée de la corrosion et du dépôt de tartre dans des systèmes d'eau de refroidissement, dans des systèmes produisant de la vapeur, dans des évaporateurs d'eau de mer, dans des appareils de cuisson hydrostatiques, dans des systèmes de lavage des gaz, ou dans des appareils de chauffage fonctionnant en circuit fermé.

8. Utilisation d'un système aqueux ou partiellement aqueux contenant entre 0,1 et 50 000 ppm d'un composé répondant à la formule I suivant la revendication 1 pour l'inhibition de la corrosion comme formule liquide aqueuse pour l'usinage à la machine, comme système de nettoyage aqueux, comme système d'antigel au glycol aqueux, comme liquide hydraulique à base d'eau/glycol ou comme système de protection de surface polymère à base d'eau.

9. Utilisation selon la revendication 8 d'une formule liquide aqueuse pour l'usinage à la machine contenant un liquide de coupe ou de polissage diluable à l'eau.

10. Utilisation suivant la revendication 7, dans laquelle le composé répondant à la formule I est utilisé avec un ou plusieurs autres inhibiteurs de corrosion, un agent dispersant et/ou agent anti-précipitation, un agent de précipitation, un agent fixant $O_2$, un agent séquestrant, un anti-mousse et un biocide.

11. Utilisation d'un système partiellement aqueux contenant entre 0,1 et 50 000 ppm du composé répondant à la formule I selon la revendication 1 pour l'usinage à la machine, dans laquelle le composé répondant à la formule I est utilisé en même temps qu'un ou plusieurs autres inhibiteurs de corrosion et/ou un additif haute pression.

12. Utilisation suivant la revendication 11, dans laquelle l'autre inhibiteur de corrosion est la triéthanolamine.

13. Utilisation suivant la revendication 12, dans laquelle le rapport du composé répondant à la formule I à la triéthanolamine est de 2 : 1 à 1 : 20.

14. Utilisation d'un système partiellement aqueux contenant entre 0,1 et 50 00 ppm du composé répondant à la formule I suivant la revendication 1 pour le revêtement superficiel aqueux, dans laquelle le composé répondant à la formule I est utilisé avec un ou plusieurs inhibiteurs de corrosion, un biocide, un émulsionnant et/ou un pigment.